**Europäisches Patentamt**

**European Patent Office**

**Office européen des brevets**

(19)

(11) Numéro de publication: **0 126 697**
A1

(12) ## DEMANDE DE BREVET EUROPEEN

(21) Numéro de dépôt: **84420062.6**

(22) Date de dépôt: **03.04.84**

(51) Int. Cl.³: **G 01 L 19/06,** G 01 F 1/34, G 01 F 15/18

(30) Priorité: **05.04.83 FR 8305723**

(43) Date de publication de la demande: **28.11.84 Bulletin 84/48**

(84) Etats contractants désignés: **AT BE CH DE GB IT LI LU NL SE**

(71) Demandeur: **Ets. A. Desbordes, société anonyme:, 56, Rue Masséna, F-69003 Lyon (FR)**

(72) Inventeur: **Gential, René, 12, rue Salvador Alliende, F-69100 Villeurbanne (FR)**

(74) Mandataire: **Karmin, Roger et al, Cabinet MONNIER 150, cours Lafayette, F-69003 Lyon (FR)**

(54) **Appareil de mesure de pression différentielle.**

(57) L'appareil suivant l'invention comprend un capteur de pression différentielle (12) dont les deux entrées (12a, 12b) sont court-circuitées par un by-pass (16-18) dans lequel est insérée une vanne (17). Les deux sondes (14, 15) aboutissant aux entrées (12a, 12b) du capteur de pression sont reliées à deux raccords (4, 5) qui peuvent être branchés à deux prises de pression. Lorsque la vanne (17) est ouverte, la perte de charge à son niveau est au moins cinq fois plus importante que celle engendrée par les deux raccords (4 et 5). Ainsi, lorsque cette vanne est ouverte, on ramène artificiellement à une valeur très voisine de zéro la différence de pression existant dans les deux sondes (14, 15) au niveau des entrées (12a, 12b).

Mesure d'un débit dans une canalisation.

1

Appareil de mesure de pression differentielle

La présente invention est relative à un dispositif destiné à mesurer de faibles pressions différentielles de liquide sous pression élevée.

De telles mesures peuvent être effectuées au moyen de deux manomètres, mais il est évident que si une telle opération peut s'exécuter en laboratoire de façon exceptionnelle, il n'est pas possible d'utiliser cette méthode si l'on veut effectuer des mesures répétitives et dans des lieux qui changent sans cesse.

La présente invention vise à permettre la réalisation d'un appareil mesureur portatif comportant un capteur de pression différentielle inclus dans un circuit électronique, le capteur de pression étant relié par des sondes à des robinets propres à s'adapter à deux orifices de prise de pression situés de part et d'autre d'un ajutage ménagé dans une canalisation véhiculant un fluide de poids volumique différent de celui de l'air, tel que de l'eau.

Les sondes d'amenée de l'eau au capteur de pression différentielle sont généralement des tubes souples, de telle sorte que lors de leur branchement, de l'air est toujours emprisonné. Bien entendu, la compressibilité de l'air conduit à un remplissage partiel des deux sondes, ledit remplissage n'étant évidemment pas le même dans chacune d'elles. Il en résulte que si les deux sondes ne sont pas dans un même plan rigoureusement horizontal sur toute la longueur des sondes, une différence de pression supplémentaire à celle qu'on doit mesurer apparaît sur le capteur de pression différentielle, de telle sorte que sa mesure est fausse.

En outre, étant donné qu'il n'est pas possible d'effectuer simultanément les branchements des deux sondes, le capteur différentiel reçoit pendant un bref instant la totalité de la pression régnant dans la canalisation avant que la pression ne soit établie dans l'autre sonde. Comme les

2

capteurs sensibles aux faibles pressions différentielles ne peuvent pas supporter de tels déséquilibres, ils peuvent être de ce fait détériorés.

On peut éliminer l'air contenu dans chacune des sondes en plaçant sur chacune de celle-ci un robinet à trois voies permettant d'évacuer à l'atmosphère l'air chassé par le liquide. Il faut néanmoins prévoir en plus la récupération de la petite giclée de liquide qui suit le fin de la purge surtout si les mesures doivent se faire dans des locaux d'habitation où les salissures sont à éviter.

Le second inconvénient sus-mentionné peut être éliminé en plaçant à l'entrée du mesureur, un manifold à trois ou cinq voies permettant d'égaliser les deux pressions au niveau du capteur. Cet appareil bien connu comme matériel de laboratoire nécessite une manoeuvre délicate, contraignante et peu commode. En réalité, seule une personne expérimentée et habituée aux disciplines des laboratoires peut mener à bien les différentes manipulations nécessitées par l'utilisation d'un manifold si l'on veut aboutir à éliminer toute erreur et toute détérioration du matériel. Les manifolds en question ne sont pas du tout adaptés à un équipement de mesure léger et portatif tel que celui envisagé par la présente invention, de plus le personnel destiné à manipuler le mesureur conforme à celle-ci n'est pas un personnel hautement qualifié puisqu'il s'agit d'un chauffagiste qui effectue des mesures en vue de réaliser l'équilibrage hydraulique d'une installation de chauffage central à fluide caloporteur.

Les perfectionnements qui font l'objet de la présente invention visent à remédier aux inconvénients précités et à permettre la réalisation d'un appareil de mesure de pression différentielle qui soit précis et d'une manoeuvre aisée. A cet effet, le mesureur suivant l'invention comprend un capteur de pression différentielle dont les entrées sont reliées à deux sondes qui sont court-circuitées par un by-pass, à proximité du capteur, les pertes de charge développées dans chaque sonde étant au moins cinq fois

3

supérieures à celles engendrées au passage du by-pass de manière que l'ouverture totale de ce dernier ramène artificiellement à une valeur très voisine de zéro la différence de pression dans les deux sondes au niveau du by-pass au moment du branchement de ces sondes sur les deux prises d'une conduite.

Selon une variante, le by-pass relie les deux sorties de purge des chambres du capteur. Ainsi, on est assuré d'évacuer complètement l'air éventuellement emprisonné dans lesdites chambres.

Suivant une forme d'exécution préférée, les pertes de charge de chaque sonde sont créées au niveau de son extrémité qui est branchée à la prise correspondante.

Le dessin annexé, donné à titre d'exemple, permettra de mieux comprendre l'invention, les caractéristiques qu'elle présente et les avantages qu'elle est susceptible de procurer :

fig. 1 illustre la manière de mesurer une pression différentielle dans un raccord au moyen d'un appareil comportant deux manomètres.

Fig. 2 montre l'appareil de mesure suivant l'invention sur lequel les sondes ont été interrompues pour des commodités de dessin.

Fig. 3 illustre une variante de montage du by-pass.

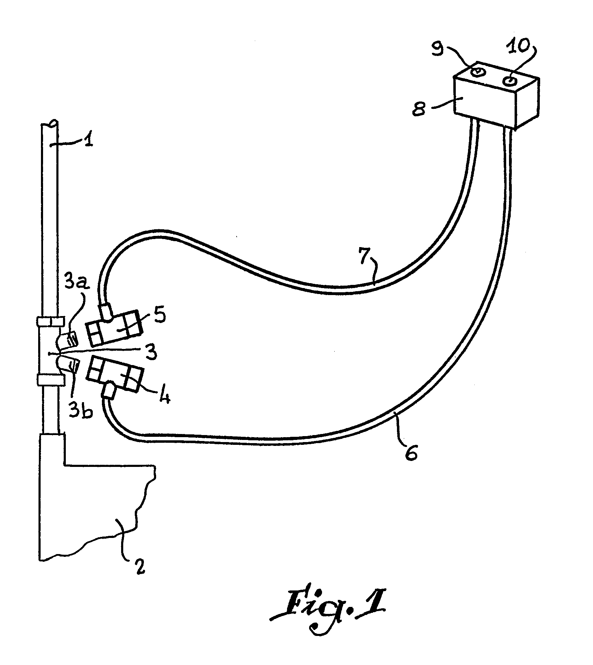

On a illustré en fig. 1 une conduite 1 véhiculant un fluide incompressible tel que de l'eau. Cette conduite pourrait être de manière non exclusive l'une des canalisation d'une installation de chauffage central à eau chaude reliée à la base d'un radiateur 2 au moyen d'un organe 3 tel que celui décrit dans le document FR-A-81 07958 de la présente Demanderesse. Cet organe 3 comporte un ajutage central non représenté qui détermine deux chambres dans chacune desquelles débouche

4

une prise de pression 3a, 3b. Pour mesurer le débit traversant l'organe 3, on mesure la différence de pression existant de part et d'autre de l'ajutage précité. A cet effet, deux raccords 4, 5 sont associés aux prises 3a, 3b, ces raccords étant reliés par des tubes souples ou sondes 6, 7 à un appareil 8 comportant deux manomètres 9 et 10. La mesure s'effectue en relevant la différence affichée sur ces deux manomètres.

Comme expliqué plus haut, une telle mesure n'est pas pratique à effectuer car l'appareil 8 est très encombrant ; de plus, la mesure s'effectue par différence de deux lectures, ce qui peut entraîner des erreurs.

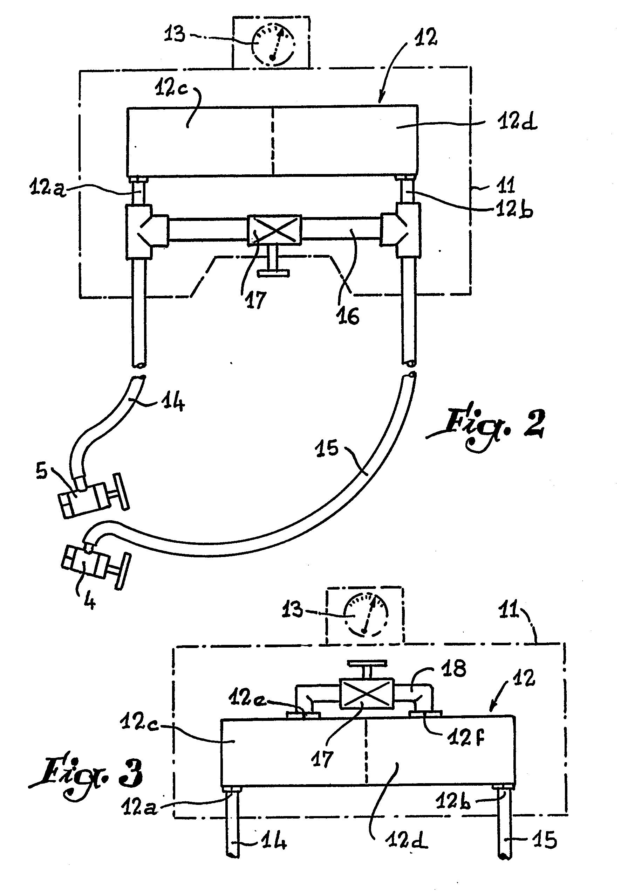

Suivant l'invention, le mesureur utilisé, et qu'on a référencé 11 en fig. 2, comporte un capteur de pression différentielle 12 intégré dans un circuit électronique non représenté qui comprend un affichage 13. Le capteur différentiel 12 comporte deux entrées 12a, 12b qui sont reliées par des sondes 14, 15 aux raccords 4, 5. On prévoit de court-circuiter les sondes 14, 15 à proximité des entrées 12a, 12b du capteur 12 au moyen d'un tube 16 constituant by-pass et dans lequel est insérée une vanne d'arrêt 17. Pour des raisons qu'on expliquera plus loin, la section de passage du by-pass 16, en particulier au niveau de sa vanne 17, induit des pertes de charge au moins 5 fois plus faibles que celles engendrées tout au long des sondes 14, 15. Suivant un mode d'exécution préféré, les pertes de charges dans les sondes sont engendrées au niveau des robinets 4 et 5.

La mesure s'effectue de la manière suivante :

On commence par ouvrir la vanne 17, puis on branche les deux robinets 4 et 5 aux prises 3a et 3b, les raccords 4 et 5 sont alors ouverts. On comprend aisément que le by-pass permet d'abord d'évacuer l'air inclus dans les deux sondes 14 et 15, cet air s'évacuant par entraînement du fluide qui parcourt le circuit du mesureur après branchement des raccords et ouverture de la vanne du seul fait de la pression

5

différentielle que l'on veut mesurer. On élimine ainsi toute différence de pression artificiellement créée soit par la position du mesureur par rapport à l'organe 3, soit par différence de hauteur d'air contenu dans les sondes. Lorsque la vanne 17 est ouverte, il est évident que les pressions au niveau des deux entrées 12a, 12b du capteur de pression différentielle 12 sont égales. Après quelques instants, c'est-à-dire lorsqu'on est certain que l'air a été entraîné vers la conduite 1, on peut agir sur le circuit électronique du capteur de pression 12 de manière à ramener l'aiguille de l'indicateur 13 à zéro. Autrement dit, le circuit électronique est recalé en correspondance avec la pression régnant dans la canalisation 1.

Après ce recalage, on ferme la vanne 17 et la différence de pression régnant au niveau des prises 3a, 3b apparaît sur l'indicateur 13 du mesureur 11. On comprend aisément que la présence du by-pass permet, lorsqu'il est ouvert, d'amener artificiellement les deux pressions existantes aux deux entrées du capteurs de pression à une valeur très voisine l'une de l'autre ; autrement dit la différence de pression est presque nulle. L'ouverture de la vanne 17 aboutit au même résultat que si la circulation du fluide était arrêtée dans la canalisation 1.

Si l'on désire obtenir une précision de 2% sur les mesures de différence de pression, il est nécessaire que les pertes de charge des raccords 4, 5 soit 25 fois plus importantes que celles qui apparaissent au niveau du by-pass 16.

On a ainsi réalisé un appareil de mesure de pression différentielle d'une grande simplicité et dont le fonctionnement n'est déclenché que par l'ouverture et la fermeture de la vanne du by-passn permettant ainsi son utilisation par du personnel   non spécialisé.

Suivant la variante de fig. 3, le by-pass, référencé 18, porte les deux branches 12c, 12d par l'intermédiaire de seconds orifices de purge 12e, 12f débouchent dans ces

6

chambres. Ainsi, la circulation du fluide dans l'appareil
évacue tout résidu d'air vers la conduite 1.

0126697

7

Revendications

1. Appareil de mesure de pression différentielle du genre
comprenant un capteur de pression (12) relié par deux tubes
de jonction ou sondes (14, 15) à deux prises (3a, 3b) d'une
conduite (1) ainsi qu'un by-pass (16-18) qui relie ces deux
sondes (14, 15) à proximité du capteur (12), caractérisé en
ce que les pertes de charge développées dans chaque sonde
(14, 15) sont au moins cinq fois supérieures à celles
engendrées au passage du by-pass (16-18) de manière que
l'ouverture totale de ce dernier ramène artificiellement à
une valeur très voisine de zéro la différence de pression
dans les deux sondes (14, 15) au niveau du by-pass (16-18).

2. Appareil de mesure suivant la revendication 1, caractérisé
en ce que les pertes de charge de chaque sonde (14, 15)
sont créées au niveau de son extrémité qui est branchée à
la prise correspondante (3a, 3b).

3. Appareil de mesure suivant la revendication 1, caractérisé
en ce que le by-pass (18) porte les deux chambres du capteur
de pression différentielle (12).

0126697

1/2

Fig.1

0126697

2/2

Fig. 2

Fig. 3

0126697

Office européen
des brevets

**RAPPORT DE RECHERCHE EUROPEENNE**

Numéro de la demande

EP 84 42 0062

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-C- 730 976 (TEYSSLER) <br> * Figures; page 3, lignes 15-31 * | 1,3 | G 01 L 19/00 <br> G 01 F 1/34 <br> G 01 F 15/18 |
| | --- | | |
| A | DE-A-2 427 905 (HOKE, INC.) <br> * Figures 1-5; page 3, alinéa 3; page 4, ligne 17 - page 5, fin de l'alinéa; page 6, alinéa 2; page 7, alinéa 2 - page 8, fin de l'alinéa * | 1,2 | |
| | --- | | |
| A | DE-A-2 727 602 (GOULD, INC.) <br> * Figures * | 1 | |
| | --- | | |
| A | FR-A- 437 224 (BUISSON) <br> * Figures * | 1 | |
| | ----- | | |

| DOMAINES TECHNIQUES RECHERCHES (Int. Cl. ³) |
|---|
| G 01 F <br> G 01 L |

Le présent rapport de recherche a été établi pour toutes les revendications

| Lieu de la recherche | Date d'achèvement de la recherche | Examinateur |
|---|---|---|
| LA HAYE | 07-08-1984 | NUIJTEN E.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03 82